# EUROPEAN PATENT APPLICATION

(11) **EP 4 837 767 A1**
(43) Date of publication of application: **11.11.2026**
(21) Application number: 25174619.4
(22) Date of filing: 06.05.2025
(51) Int. Cl.: B60L 1/00, B60L 53/30, B60L 53/16, B60L 53/18, B60L 53/57, B60L 53/66

(54) **ADAPTER FOR PROVIDING ELECTRIC POWER BY AN ELECTRIC VEHICLE, METHOD, DATA PROCESSING APPARATUS, ELECTRIC VEHICLE, SYSTEM**

(71) Applicant: Volvo Car Corporation, 405 31 Göteborg (SE)
(72) Inventor: ARUL PRAKASH, Deepak, 40531 Göteborg (SE)
(74) Representative: Kransell & Wennborg KB

(57) **Abstract**

The disclosure relates to an adapter (20) for providing electric power by an electric vehicle (10). The adapter (20) comprises a first communication interface connectable to a socket (14) of the electric vehicle (10). The adapter (20) further comprises a first power interface connectable to the socket (14) of the electric vehicle (10). The adapter (20) further comprises a second power interface connectable to one end of a vehicle-to-vehicle, V2V, cable (30), and/or to one end of a vehicle-to-load, V2L, cable (50). Further, the adapter (20) comprises at least one first passive component (61) indicative of a V2V connection and/or at least one second passive component (65) indicative of a V2L connection. At least two communication ports (22a, 22b, 22c) of the first communication interface are connected to one another via the at least one first passive component (61). Additionally or alternatively, the at least two communication ports (22a, 22b, 22c) of the first communication interface are connected to one another via the at least one second passive component (65, 66). Further, at least two power ports (23a and 23b) of the first power interface electrically connected to the second power interface.

## Description

### TECHNICAL FIELD

The present disclosure relates to an adapter for providing electric power by an electric vehicle.

The present disclosure also relates to a method for providing electric power by an electric vehicle.

The present disclosure also relates to a data processing apparatus.

The present disclosure also relates to an electric vehicle.

The present disclosure also relates to a system.

### BACKGROUND ART

Modern hybrid or electric vehicles allow discharging energy stored in its battery to an external load such as a grid, a vehicle, a home appliance, etc. Such energy transfer requires a conductive medium, for instance a cable. Currently, in case of a vehicle-to-vehicle (V2V) power transfer, a specialized proprietary cable is used. In case of a vehicle-to-load (V2L) power transfer, a special adapter is required between the donor vehicle, i.e., the vehicle providing electric power, and the load. Such adapter provides a fixed power output, which reduces flexibility.

### SUMMARY

It is the objective of the present disclosure to improve an adapter for providing electric power by an electric vehicle.

The problem is at least partially solved or alleviated by the subject matter of the independent claims of the present disclosure, wherein further examples are incorporated in the dependent claims.

According to a first aspect, there is provided an adapter for providing electric power by an electric vehicle. The adapter comprises a first communication interface connectable to a socket of the electric vehicle. The adapter further comprises a first power interface connectable to the socket of the electric vehicle. The adapter further comprises a second power interface connectable to one end of a vehicle-to-vehicle (V2V) cable, and/or to one end of a vehicle-to-load (V2L) cable. Further, the adapter comprises at least one first passive component indicative of a V2V connection and/or at least one second passive component indicative of a V2L connection. At least two communication ports of the first communication interface are connected to one another via the at least one first passive component.

Additionally or alternatively, the at least two communication ports of the first communication interface are connected to one another via the at least one second passive component. Further, at least two power ports of the first power interface electrically connected to the second power interface.

A vehicle may be any one of a four-wheeler, a two-wheeler, a commercial vehicle, a boat, an airplane, a train, or the like. The adapter may be an intermediary device via which two or more pieces of equipment are connectable to the same electrical supply. However, only one of the two or more pieces of equipment may receive electric power from such same electrical supply. The adapter may comprise a plug for plugging into an electrical supply and a socket(s) to which plugs of external equipment can be plugged into. The first interface(s) of the adapter may be the plug of the adapter and the second interface(s) of the adapter may be the socket of the adapter. The plug of the adapter may be configured to be fitted into the standardized connector type of the socket of an electric vehicle of a country. The country herein is a country to which the vehicle is initially sold, thereby requiring that the vehicle to comply with the standard set out by or widely used in the country. In North America, Type 1 - J1772 for an AC connector, CCS - type 1 for a DC connector, and North America Charging Standard (NACS) for an AC or DC connector is used. In Europe, Type 2 for an AC connector and CCS - Type 2 for a DC connector is used. In Japan, Type 1 - J1772 for an AC connector and CHAdeMO for a DC connector is used. In China GB/T for an AC connector and GB/T for a DC connector is use. In the Gulf Cooperation Council (GCC) countries, including Bahrain, Kuwait, Oman, Qatar, Saudi Arabia, and the United Arab Emirates, Type 2 for an AC connector and CCS - type 2 is used. Worldwide, few original equipment manufacturers (OEMs) use proprietary connector designs or types for their products. The socket of the adapter may comprise a first socket for accepting a plug of the V2V cable and a second socket for accepting a plug of the V2L cable. The V2L cable may comprise or be any means or interface for interconnecting the load to a power source. The V2L cable may be integrated into the load, e.g., the cable is soldered onto or non-removable from the load. The V2L cable may comprise at least one of AC/DC, AC/DC, DC/DC, and DC/AC adapter, e.g., a laptop AC adapter. The first socket of the adapter may be configured to correspond to the plug of the adapter. That is, the first socket of the adapter may be configured to accept standardized connector type of the socket of an electric vehicle of the country. The second socket of the adapter may be configured to according to the socket-plug type of the country. Herein, the socket-plug type refers to the type used by an AC power plug and socket to connect devices, e.g., home appliances, to mains electricity to supply them with electrical power. For instance, socket-plug type A is used in the USA, Canada, Mexico, and Japan, socket-plug type B is used in the USA, Canada, and Mexico, socket-plug type C is used by some of the countries in Europe, South America and Asia, socket-plug type D is used in India, socket-plug type E is used in France, Belgium, Poland, Slovakia, Czech republic, socket-plug type F is used in some countries in Europe and Rusia, socket-plug type G is used in the United Kingdom, Ireland, Malta, Malaysia, and Singapore, socket-plug type H is used in Israel, socket-plug type I is used in Australia, New Zealand, China, and Argentina, socket-plug type J is used in Switzerland and Liechtenstein, socket-plug type K is used in Denmark, socket-plug type L is used in Italy and Chile, socket-plug type M is used in South Africa, socket-plug type N is used in Brazil and South Africa, and socket-plug type O is used in Thailand.

The adapter can be plugged into the electric vehicle, where the electric vehicle acts as an electrical supply, hence may also be referred to as a donor vehicle. The electric vehicle may be a hybrid electric vehicle or a fully electric vehicle. The first communication port of the first communication interface of the adapter may correspond to Proximity pilot (PP) for pre-insertion signaling, and the second communication port of the first communication interface of the adapter may correspond to Protective earth (PE) for full-current protective earthing system.

Herein the term "port" may also be referred to as a terminal for connecting to an external circuit. The power ports and the power interfaces of the adapter supports at least one of a single-phase power transfer and a multi-phase, e.g., two-phase or a three-phase, power transfer. The ports of the adapter may be interconnected to one another via an interconnection module. The interconnection module may comprise at least one of the at least one first passive component and the at least one second passive component. The first passive component may comprise any combination of passive electric component designed or configured to respond in a specific manner upon interaction with said component. For instance, the first passive component may comprise or be a resistor with a pre-defined resistance specifically set or selected for the V2V power transfer mode. A detection of the resistor may indicate the V2V connection. Herein, the phrase "indicative of" may bear the same meaning as, thus can be interchangeably used with, other phrases such as relating to, dependent on, showing the existence of, and the likes. For instance, the at least one first passive component may comprise information regarding the V2V connection, e.g., by means of a specific impedance. Similarly, the at least one second passive component may comprise information regarding the V2L connection, e.g., by means of a specific impedance. As said components are passive, the comprised information may be obtained through an interaction with said components. The V2V connection may comprise the connection between the adapter and the socket of the electric vehicle for providing electric power from said electric vehicle under the V2V power transfer mode. The V2V connection may be selected by a user by interacting with the adapter. Accordingly, a detection of the resistor may indicate that the V2V power transfer mode is selected, e.g., by the user. The second passive component may comprise any combination of passive electric component designed or configured to respond in a specific manner upon interaction with said component. For instance, the second passive component may comprise or be a resistor with a pre-defined resistance specifically set or selected for the V2L power transfer mode. A detection of the resistor may indicate the V2L connection. The V2L connection may comprise the connection between the adapter and the socket of the electric vehicle for providing electric power from said electric vehicle under the V2L power transfer mode. The V2L connection may be selected by a user by interacting with the adapter. Accordingly, a detection of the resistor may indicate that the V2L power transfer mode is selected, e.g., by the user. The power ports of the first power interface may be connected to the power ports of the second power interface of the adapter via the interconnection module.

The adapter may further comprise at least one mode switching module for connecting the at least two communication ports of the first communication interface to one another via the at least one first passive component, or alternatively, for connecting the at least two communication ports of the first communication interface are connected to one another via the at least one second passive component. The switching module may be operable, e.g., by a user. The state of the switching module, i.e., the connection that the switching module is making, may be indicative of the selected power transfer mode desired by the user.

The adapter according to the first aspect of the present disclosure allows the V2V cable and/or the V2L cable to be connected to the same power source, i.e., the donor electric vehicle, via a single adapter. This advantageously, removes the need for the user to own different adapters and/or cables for different power transfer modes. Specifically, the adapter allows the V2V cable to be a standardized cable, not a proprietary cable e.g., with a specifically designed control module integrated into the cable to enable a V2V power transfer mode. Instead, the at least one passive first and/or second components comprised in the adapter according to the first aspect serves as an indicator(s) upon interaction with the donor electric vehicle. This allows the vehicle to obtain information to determine an appropriate power transfer mode and/or form, without said control module integrated into the V2V cable, whilst also allowing an alternative V2L power transfer using a single adapter. Consequently, the adapter advantageously simplifies the power transfer from the electric vehicle.

In an example, the adapter comprises both the at least one first passive component and the at least one second passive component. In addition, the adapter further comprises a mode switching module selectively connecting the at least two communication ports to one another via either the at least one first passive component or the at least one second passive component.

The mode switching module may comprise or be at least one switch. The mode switching module may be comprised in the interconnection module of the adapter. The mode switching module may be operated by a user, e.g., by interacting with the switching module or any other module connected thereto. For instance, the user may select, by pushing a button connected to the switching module, the connection between the at least two communication ports via either the at least one first passive component or the at least one second passive component. Since the at least one first passive component is indicative of the V2V connection and the at least one second passive component is indicative of the V2L connection, such section is indicative of the selected power transfer mode. One of the power transfer mode may be initially selected by default without any input from the user.

The adapter according to the example above selectively connects the communication ports of the adapter, thereby indicating the selected power transfer mode. As such switching module is comprised in the adapter, such selection is performed at the adapter and not at the electric vehicle. This allows the user to interact predominantly or solely with the adapter to provide relevant information, i.e., the selected power transfer mode in this case, thereby limiting the interaction with the electric vehicle to enable the power transfer. This advantageously simplifies the power transfer process.

In an example, the adapter comprises a plurality of second passive components. At least one passive component of the plurality of second passive components is indicative of a socket type of the second power interface connectable to the one end of the V2L cable.

The impedance of the at least one passive component may be preset or configured for respective socket-plug type, i.e., the standard plug-socket type implemented in respective countries. Accordingly, upon detecting said specific impedance alone in combination with impedance of other components may provide information regarding the plug-socket type of the adapter.

The adapter according to the example above provides information regarding the socket type of the second power interface to an external entity, upon detecting the at least one passive component of the plurality of second passive components. As the required load voltage, current, and frequency differ for different socket types, the power transfer can be adapted accordingly. Consequently, the adapter may advantageously further simplify the power transfer process.

In an example, the at least one passive component is connected in series to the rest of the plurality of second passive components. The adapter further comprises a V2L power switching module connected in parallel to the at least one passive component. The V2L power switching module selectively connects or disconnects a parallel line comprising the V2L power switching module.

The V2L power switching module may be comprised in the interconnection module of the adapter. Assuming a negligible resistance of the V2L power switching module, when the V2L power switching module connects, i.e., the switching module is closed, the parallel line comprising the V2L power switching module, the equivalent impedance of the plurality of second passive components is approximately equal to the impedance of the rest of the plurality of second passive components. When the V2L power switching module disconnects, i.e., the switching module is opened, the parallel line comprising the V2L power switching module, the equivalent impedance of the plurality of second passive components is equal to the linear combination of the impedance of the at least one component of the plurality of second passive components and the impedance of the rest of the plurality of second passive components. The status of the V2L power switching module, i.e., connecting or disconnecting, may be determined as the user interacts with the adapter, e.g., by pushing a button connected to the V2L power switching module. Such V2L power switching module may be indicative of start or stop of the V2L power switching module.

The adapter according to the example above selectively provides information regarding the socket type of the second power interface to an external entity, e.g., the connected donor electric vehicle, through the user-operable V2L power switching module. Consequently, the adapter may provide relevant information to the donor electric vehicle for the V2L power transfer mode via the adapter, eliminating the need to separately provide such information to the electric vehicle. This advantageously simplifies the V2L power transfer process.

In an example, the adapter further comprises at least one third passive component indicative of an ambident condition. The at least one third passive component is connected to the V2L power switching module in series.

The at least one third passive component may have a temperature-dependent impedance. The at least one third passive component may comprise or be a temperature switch or thermal switch. The switching status of the temperature switch may change depending on the ambient temperature. For instance, under a pre-set temperature range, the thermal switch may be closed, i.e., conducting electricity therethrough, and the thermal switch may be opened when the ambient temperature is outside of said range. This advantageously allows an external entity, e.g., the connected electric vehicle, to obtain information regarding the ambient temperature, which may be used to determine whether the V2L power transfer should be continued or stopped. This advantageously improves the safety of the adapter operating under the V2L power transfer mode.

In an example, the adapter further comprises a second communication interface connectable to the one end of the V2V cable. In addition, the adapter comprises a V2V power switching module selectively connecting or disconnecting at least two communication ports of the second communication interface to the respective at least two communication ports of the first communication interface.

The V2V power switching module may be comprised in the interconnection module of the adapter. When the V2V power switching module connects, i.e., the switching module is closed, the first communication interface to the second communication interface, the adapter may advantageously provides the path where the information regarding the V2V cable connectable to the adapter. For instance, the V2V cable may comprise an impedance indicative of the electrical limit of the V2V cable. When the V2V power switching module is closed, such cable impedance, or the absence thereof when the V2V cable is not connected to the adapter, may be detectable through the adapter, as the electric vehicle interacts with the cable impedance through the adapter. The status of the V2V power switching module, i.e., connecting or disconnecting, may be determined as the user interacts with the adapter, e.g., by pushing a button connected to the V2V power switching module. Such V2V power switching module may be indicative of start or stop of the V2V power switching module.

The adapter according to the example above selectively provides information regarding the V2V cable connectable to the adapter to an external entity, e.g., the connected donor electric vehicle, through the user-operable V2V power switching module. Consequently, the adapter may provide relevant information to the donor electric vehicle for the V2V power transfer mode via the adapter, eliminating the need to separately provide such information to the electric vehicle. This advantageously simplifies the V2V power transfer process.

In an example, the first communication interface comprises a third communication port. The adapter further comprises at least one fourth passive component, indicative of an ambident condition. The at least one fourth passive component is connected to the third communication port. The adapter further comprises a safety switching module selectively connecting or disconnecting the third communication port to a ground port comprised in the adapter or a further communication port comprised in the second interface.

The third communication port of the first communication interface of the adapter may correspond to Control pilot (CP) for post-insertion signaling. The at least one fourth passive component may have a temperature-dependent impedance. The at least one fourth passive component may comprise or be a temperature switch or thermal switch. The switching status of the temperature switch may change depending on the ambient temperature. For instance, under a pre-set temperature range, the thermal switch may be closed, i.e., conducting electricity therethrough, and the thermal switch may be opened when the ambient temperature is outside of said range. This advantageously allows an external entity, e.g., the connected electric vehicle, to obtain information regarding the ambient temperature, which may be used to determine whether the V2V power transfer should be continued or stopped. This advantageously improves the safety of the adapter operating under the V2V power transfer mode.

According to a second aspect, there is provided a method for providing electric power by an electric vehicle using the adapter of any example of the first aspect of the present disclosure having the first communication interface and the first power interface of the adapter connected to a socket of the electric vehicle. The method comprises providing, to at least two communication ports of the socket of the vehicle, at least one test signal. The method further comprises obtaining, via the at least two communication ports of the socket of the vehicle, data indicative of a response to the at least one test signal. Further, the method comprises selectively providing, based on the obtained data, electric power to at least two power ports of the socket of the electric vehicle.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The method may describe the interaction of the electric vehicle with the adapter. The electric vehicle may provide, to at least two communication ports of the socket of the vehicle, at least one test signal. The at least one test signal may comprise or be a voltage established between the at least two communication ports of the socket of the vehicle. The at least one test signal may comprise or be a current injected into one of the at least two communication ports of the socket of the vehicle. The electric vehicle may obtain, via the at least two communication ports of the socket of the vehicle, data indicative of response of the at least one test signal. The data may comprise or be a sensed current and/or voltage. The electric vehicle may determine, based on the obtained data, any information relevant for providing the electric power. The electric vehicle may selectively provide, based on the obtained data, and optionally the determined information, electric power to at least two power ports of the socket of the electric vehicle.

The method may further comprise performing any required communication steps following the industry charging standard, e.g., IEC 61851-1. For instance, the method may comprise, obtaining, by the donor electric vehicle, data indicative that the charging vehicle is ready to accept charges from the donor electric vehicle; and providing, by the donor electric vehicle based on the obtained data, electric power to the charging electric vehicle. Additionally or alternatively, may comprise, obtaining, by the donor electric vehicle, data indicative that the charging vehicle is ready to terminate the power transfer; and terminating, by the donor electric vehicle based on the obtained data, electric power transfer to the charging electric vehicle.

The method according to the second aspect of the present disclosure contributes to allowing the V2V cable and/or the V2L cable to be connected to the same power source, i.e., the donor electric vehicle, via a single adapter. This advantageously, removes the need for the user to own different adapters and/or cables for different power transfer modes. Specifically, the method contributes to allowing the V2V cable to be a standardized cable, not a proprietary cable e.g., with a specifically designed control module integrated into the cable to enable a V2V power transfer mode. Instead, the at least one passive first and/or second components comprised in the adapter according to the first aspect serves as an indicator(s) upon interaction with the donor electric vehicle. This allows the vehicle to obtain information to determine an appropriate power transfer mode and/or form, without said control module integrated into the V2V cable, whilst also allowing an alternative V2L power transfer using a single adapter. Consequently, the method advantageously simplifies the power transfer from the electric vehicle.

In an example, the method further comprises obtaining, from the electric vehicle, further data indicative of mains electricity of a country to which the electric vehicle is adjusted. The selectively providing power to the at least two power ports of the socket of the vehicle is further based on the obtained further data.

Herein, mains electricity refers to the form, i.e., voltage, frequency, and current, of electrical power delivery which is standardized for a specific country. Mains electricity may relate to or be dependent on the socket-plug type of the country. Mains electricity may bear the same meaning, thus may be interchangeably used with terms such as "utility power", "household power", "household electricity", "house current", "powerline", "domestic power", "wall power", "line power", "wall current", "AC power", "city power", and "street power". The further data may comprise or be current and/or voltage, which are responses to the at least one test signal, sensed at the socket of the electric vehicle. For instance, the further data may comprise or be a signal relating to the presence or absence of the at least one passive component of the plurality of second passive components comprised in the adapter. The method may further obtain yet another further data, which may be responses of any of the first, second, third, and fourth passive components comprised in the adapter to the provided at least one test signal.

The method of the example above advantageously allows the electric vehicle to further obtain specific information that is relevant for the power transfer from the electric vehicle. Such method advantageously improves the reliability and/or safety of the power transfer

According to a third aspect, there is provided a processing apparatus comprising means for carrying out the method according to any one of the examples of the second aspect of the present disclosure.

The processing apparatus according to the third aspect of the present disclosure contributes to allowing the V2V cable and/or the V2L cable to be connected to the same power source, i.e., the donor electric vehicle, via a single adapter. This advantageously, removes the need for the user to own different adapters and/or cables for different power transfer modes. Specifically, the processing apparatus contributes to allowing the V2V cable to be a standardized cable, not a proprietary cable e.g., with a specifically designed control module integrated into the cable to enable a V2V power transfer mode. Instead, the at least one passive first and/or second components comprised in the adapter according to the first aspect serves as an indicator(s) upon interaction with the donor electric vehicle. This contributes to allowing the vehicle to obtain information to determine an appropriate power transfer mode and/or form, without said control module integrated into the V2V cable, whilst also allowing an alternative V2L power transfer using a single adapter. Consequently, the processing apparatus advantageously contributes to simplifying the power transfer from the electric vehicle.

According to a fourth aspect, there is provided an electric vehicle. The electric vehicle comprises socket connectable to a first communication interface and a first power interface of an adapter; a battery; a communication module; a power transfer module; and a data processing apparatus according to the third aspect of the present disclosure. The socket comprises at least two communication ports and at least two power ports. The at least two communication ports of the socket are communicatively connected to the communication module. The at least two power ports of the socket are electrically connected to the battery via the power transfer module. Further, the communication module is communicatively connected to the power transfer module via the data processing module.

The electric vehicle according to the fourth aspect of the present disclosure contributes to allowing the V2V cable and/or the V2L cable to be connected to the same power source, i.e., the donor electric vehicle, via a single adapter. This advantageously, removes the need for the user to own different adapters and/or cables for different power transfer modes. Specifically, the electric vehicle contributes to allowing the V2V cable to be a standardized cable, not a proprietary cable e.g., with a specifically designed control module integrated into the cable to enable a V2V power transfer mode. Instead, the at least one passive first and/or second components comprised in the adapter according to the first aspect serves as an indicator(s) upon interaction with the donor electric vehicle. This contributes to allowing the vehicle to obtain information to determine an appropriate power transfer mode and/or form, without said control module integrated into the V2V cable, whilst also allowing an alternative V2L power transfer using a single adapter. Consequently, the electric vehicle advantageously contributes to simplifying the power transfer from the electric vehicle.

In an example, the socket comprises a third communication port connectable to a third communication port of a first communication interface of an adapter. The third communication port of the socket is communicatively connected to the communication module.

The third communication port of the socket may correspond to Control pilot (CP) for post-insertion signaling. The at least one fourth passive component may have a temperature-dependent impedance. The at least one fourth passive component may comprise or be a temperature switch or thermal switch. The switching status of the temperature switch may change depending on the ambient temperature. For instance, under a pre-set temperature range, the thermal switch may be closed, i.e., conducting electricity therethrough, and the thermal switch may be opened when the ambient temperature is outside of said range. This advantageously allows the electric vehicle to obtain information regarding the ambient temperature, which may be used to determine whether the V2V power transfer should be continued or stopped. This advantageously improves the safety of the adapter operating under the V2V power transfer mode.

In an example, the data processing apparatus comprises a data storage module storing further data indicative of mains electricity of a country to which the electric vehicle is adjusted.

The socket of the electric vehicle may be configured according to the standardized connector type of a country. The country herein is a country to which the vehicle is initially sold, thereby requiring that the vehicle to comply with the standard set out by or widely used in the country. For instance, in North America, Type 1 - J1772 for an AC connector, CCS - type 1 for a DC connector, and North America Charging Standard (NACS) for an AC or DC connector is used. In Europe, Type 2 for an AC connector and CCS - Type 2 for a DC connector is used. In Japan, Type 1 - J1772 for an AC connector and CHAdeMO for a DC connector is used. In China GB/T for an AC connector and GB/T for a DC connector is use. In the Gulf Cooperation Council (GCC) countries, including Bahrain, Kuwait, Oman, Qatar, Saudi Arabia, and the United Arab Emirates, Type 2 for an AC connector and CCS - type 2 is used. Worldwide, few OEMs use proprietary connector designs or types for their products.

According to a fifth aspect, there is provided a system. The system comprises the adapter according to any one of the examples of the first aspect of the present disclosure. Further, the system comprises the electric vehicle according to any one of the examples of the fourth aspect of the present disclosure. The system also comprises a vehicle-to-vehicle, V2V, cable comprising one end connectable to the second power interface of the adapter and the other end connected to a socket of a charging electric vehicle, and the charging electric vehicle, or alternatively a vehicle-to-load, V2L, cable comprising one end connectable to the second power interface of the adapter and the other end connected to an electric load, and the electric load. The first communication interface and the first power interface of the adapter are connected to the socket of the electric vehicle, and the second power interface of the adapter is connected to the one end of the V2V cable or the one end of the V2L cable.

The system according to the fifth aspect of the present disclosure contributes to allowing the V2V cable and/or the V2L cable to be connected to the same power source, i.e., the donor electric vehicle, via a single adapter. This advantageously, removes the need for the user to own different adapters and/or cables for different power transfer modes. Specifically, the system contributes to allowing the V2V cable to be a standardized cable, not a proprietary cable e.g., with a specifically designed control module integrated into the cable to enable a V2V power transfer mode. Instead, the at least one passive first and/or second components comprised in the adapter according to the first aspect serves as an indicator(s) upon interaction with the donor electric vehicle. This contributes to allowing the vehicle to obtain information to determine an appropriate power transfer mode and/or form, without said control module integrated into the V2V cable, whilst also allowing an alternative V2L power transfer using a single adapter. Consequently, the system advantageously contributes to simplifying the power transfer from the electric vehicle.

The charging vehicle may require a battery connected to the socket of the charging vehicle, to which the other end of the V2V cable can be plugged into, such that when electric power is provided by the donor electric vehicle through the V2V cable to the charging electric vehicle, the electric power can be stored in the battery of the charging electric vehicle.

In an example, the V2V cable comprises or is a standardized cable for a V2V power transfer. Additionally or alternatively, the V2V cable comprises at least two communication ports connectable to the second communication interface of the adapter and connected to one another via a fifth passive component.

The standardized cable is passive in that the cable excludes a controller, particularly an active controller, for the power transfer between the electric vehicles. The standardized cable may be universally usable and/or may exclude proprietary cables.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates a system according to an example of the present disclosure comprising an adapter according to an example of the present disclosure, an electric vehicle according to an example of the present disclosure, a vehicle-to-vehicle cable, a charging electric car, a vehicle-to-load cable, and a load.
- Figure 2: illustrates a flow chart according to an example of the present disclosure showing an overall process of providing power from the electric vehicle using the system shown in Figure 1
- Figure 3: illustrates a method according to an example of the present disclosure for providing power from the electric vehicle using the system shown in Figure 1
- Figure 4: illustrates a detailed example of the interconnection module of the adapter shown in Figure 1 for a Vehicle-to-Vehicle power transfer mode
- Figure 5: illustrates another detailed example of the interconnection module of the adapter shown in Figure 1 for a Vehicle-to-Load power transfer mode
- Figure 6: illustrates different scenarios under which the electric vehicle according to Figure 1 provides power to the connected load according to Figure 1 via the adapter configured according to Figure 5.

### DETAILED DESCRIPTION

The Figures are merely schematic representations and serve only to illustrate examples of the disclosure. Identical or equivalent elements are in principle provided with the same reference signs.

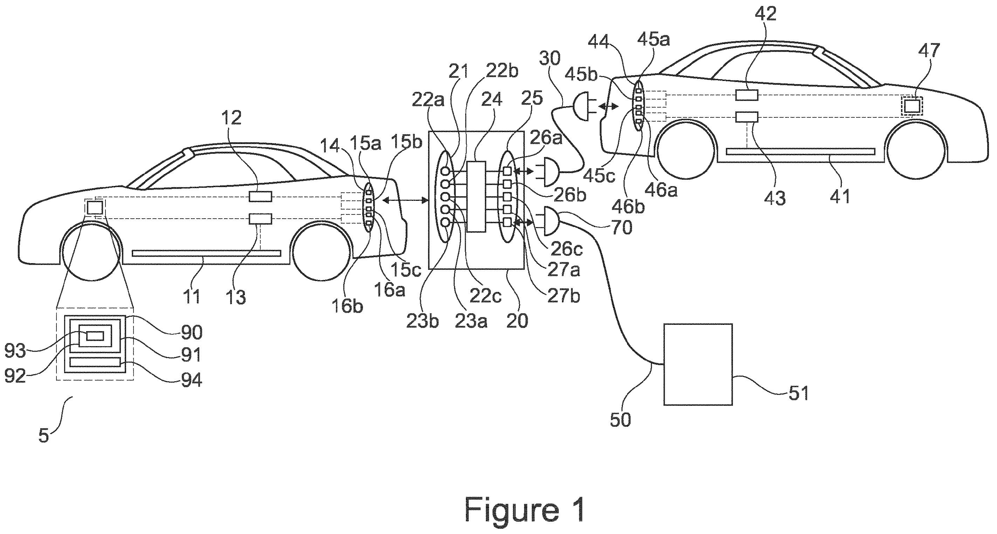

Figure 1 shows a system 5 comprising an electric vehicle 10, an adapter 20, vehicle-to-vehicle (V2V) cable 30, a charging vehicle 40, a Vehicle-to-Load (V2L) cable 50, and an electric load 51.

The electric vehicle 10 comprises a battery 11, a communication module 12, a power transfer module 13, a socket 14, and a data processing apparatus 90.

The socket 14 comprises three communication ports 15a, 15b, and 15c and two power ports 16a and 16b.

The three communication ports 15a, 15b, and 15c of the socket 14 are communicatively connected to the data processing apparatus 90 via the communication module 12.

The two power ports 16a and 16b of the socket 14 are electrically connected to the battery 11 via the power transfer module 13.

The power transfer module 13 is communicatively connected to the data processing apparatus 90.

The data processing apparatus 90 comprises a data storage unit 91 and a data processing unit 94.

The data storage unit 91 comprises a computer-readable storage medium 92.

On the computer-readable storage medium 92, there is provided a computer program 93.

The computer program 93 and, thus, also the computer-readable storage medium 92, comprise instructions which, when executed by the data processing unit 94, or, more generally speaking, a computer, cause the computer or the data processing unit 94 to carry out a method for providing power from the electric vehicle 10.

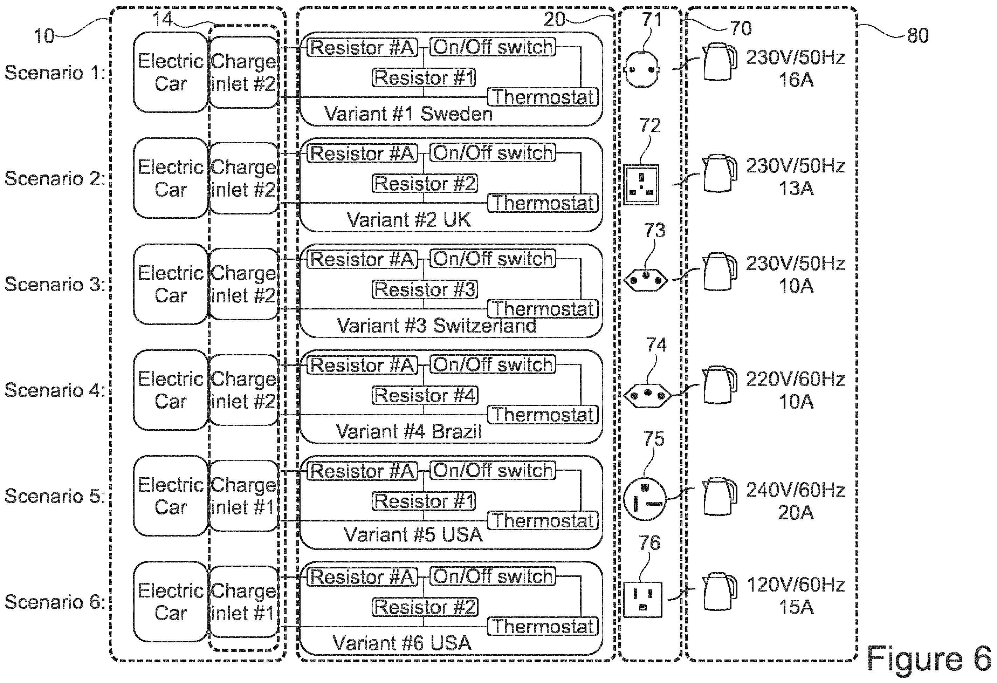

Consequently, the data storage unit 91 and the data processing unit 94 form means for carrying out the method, for instance as shown in Figure 6.

Still referring to Figure 1, the adapter 20 comprises a first interface 21, a second interface 25, and an interconnection module 24.

The first interface 21 comprises a first communication interface and a first power interface, and the second interface 25 comprises a second communication interface and a second power interface..

The first communication interface comprises three communication ports 15a, 15b, and 15c.

The three communication ports 22a, 22b, and 22c of the first communication interface are connectable to the respective three communication ports 15a, 15b, and 15c of the socket 14 of the electric vehicle 10.

Herein, the first communication interface is connected to the socket 14, i.e., the three communication ports 15a, 15b, and 15c of the first communication interface are connected to the respective three communication ports 22a, 22b, and 22c of the socket 14, unless otherwise specified.

The first power interface comprises two power ports 23a and 23b.

The two power ports 23a and 23b of the first power interface are connectable to the respective two power ports 16a and 16b of the socket 14 of the electric vehicle 10.

Herein, the first power interface is connected to the socket 14, i.e., the two power ports 23a and 23b of the first power interface are connected to the respective two power ports 16a and 16b of the socket 14, unless otherwise specified.

The second communication interface comprises three communication ports 26a, 26b, and 26c.

The three communication ports 26a, 26b, and 26c of the second communication interface are connectable to the respective three communication ports (omitted in Figure 1) at one end of a V2V cable 30. Herein, the one end is referred to as a first end.

The second power interface comprises first two power ports connectable to the one end of the V2V cable 30 , and second two power ports connectable to one end of a V2L cable. For simplicity, the first and second two power ports are illustrated with single two power ports 27a and 27b.

The three communication ports 22a, 22b, and 22c of the first communication interface are connected to the three communication ports 26a, 26b, and 26c of the second communication interface via the interconnection module 24. Further, the two power ports 23a and 23b of the first power interface are connected to the respective two power ports 27a and 27b of the second power interface.

Still referring to Figure 1, the charging electric vehicle 40 comprises the same components as those comprised in the electric vehicle 10. That is, the charging electric vehicle 40 comprises a battery 41, a communication module 42, a power transfer module 43, a socket 44, and a data processing apparatus 47 respectively correspond to the battery 11, the communication module 12, the power transfer module 13, the socket 14, and the data processing apparatus 90 of the electric vehicle 10. For simplicity, the details of the charging electric vehicle 40 are not repeated herein.

The components comprised in the charging electric vehicle 40 are interconnected in the same way as those connected in the electric vehicle 10.

The socket 44 of the charging electric vehicle 40 also comprises three communication ports 45a, 45b, and 45c and two power ports 46a and 46b, where the socket 44 is connectable to the other end of the V2V cable 30. Herein, the other end of the V2V cable 30 is referred to as a second end of the V2V cable 30.

Herein, for illustrative purposes, the charging electric vehicle 40 is connected to the second end of the V2V cable 30, i.e., the three communication ports 45a, 45b, and 45c of the socket 44 are connected to respective three communication ports (omitted in Figure 1 for brevity) at the second end of the V2V cable 30, and the two power ports 46a and 46b of the socket 44 are connected to respective two power ports (omitted in Figure 1 for brevity) at the second end of the V2V cable 30.

Still referring to Figure 1, the electric load 51 51, e.g., an electrically heated kettle, is electrically connected to the V2L cable 50.

When the first communication and power interfaces of the adapter 20 are connected to the respective ports of the socket 14 of the electric vehicle 10, the electric vehicle 10 obtains various data used for providing electric power. For instance, the data comprises a desired power transfer mode (i.e., either a V2V power transfer or a V2L power transfer), a socket-plug type at the first end of the V2L cable 50, an ambient condition, a line connection status, and so forth.

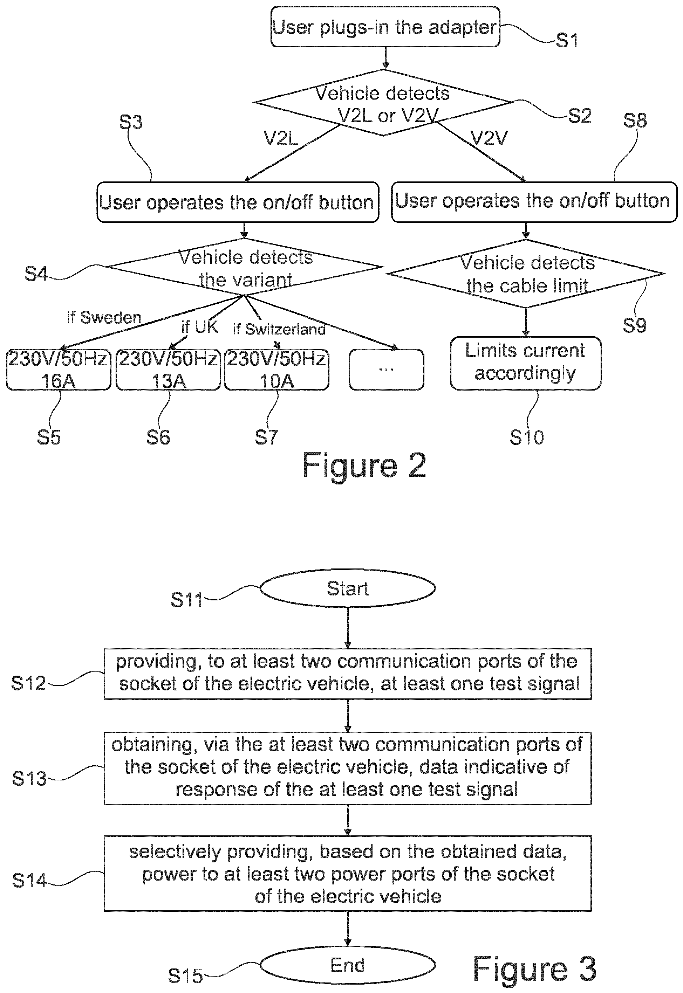

Figure 2 illustrates a flow chart of an overall process of providing power from the electric vehicle 10 using the system 5 shown in Figure 1.

At S1, the adapter 20 is plugged into the socket 14 of the electric vehicle 10, e.g., by a user.

At S2, the electric vehicle 10 obtains data indicative of whether the connected adapter 20 has been set to or configured to operate under the V2V power transfer mode or the V2L power transfer mode.

Such data is obtained through an interaction between the electric vehicle 10 and the connected adapter 20. For instance, the electric vehicle 10 provides test signals to the adapter 20, and monitors the response to such test signals by the adapter 20 at the electric vehicle 10. This way, the selected power transfer mode can be determined, and the electric vehicle 10 provides appropriate electric power based thereon.

The adapter 20 is configured, for instance by a user, to provide such data upon interaction with the electric vehicle 10.

Upon determining, by the electric vehicle 10, that the connected adapter 20 has been configured to operate under the V2L power transfer mode, S3 is executed. Alternatively, upon determining, by the electric vehicle 10, that the connected adapter 20 has been configured to operate under the V2V power transfer mode, S8 is executed.

At S3, the electric vehicle 10 obtains data indicative of whether the adapter 20 has been set to or configured to start or stop the V2L power transfer.

Such data is obtained through an interaction between the electric vehicle 10 and the connected adapter 20. For instance, the electric vehicle 10 provides test signals to the adapter 20, and monitors the response to such test signals by the adapter 20 at the electric vehicle 10. This way, the selected start or stop of the V2L power transfer can be determined, and the electric vehicle 10 provides appropriate electric power based thereon.

The adapter 20 is configured, for instance by a user, to provide such data upon interaction with the electric vehicle 10.

At S4, the electric vehicle 10 obtains data indicative of the adapter 20's socket-plug type, to which the plug is connected. The plug is connected to the electric load 51 via the V2L cable 50.

Such data is obtained through an interaction between the electric vehicle 10 and the connected adapter 20. For instance, the electric vehicle 10 provides test signals to the adapter 20, and monitors the response to such test signals by the adapter 20 at the electric vehicle 10. This way, the current, voltage, and frequency required by the electric load 51 can be determined, and the electric vehicle 10 provides appropriate electric power based thereon.

The component of the adapter 20 providing such data upon interaction with the electric vehicle 10 is configured based on the mains electricity of the country for which the adapter 20 is configured.

The electric vehicle 10 also obtains data indicative of the connector type of the electric vehicle's socket 14, to which the adapter 20 is connected. Such data is dependent on the standardized connector type implemented in respective country, for which the electric vehicle 10 is configured. Such data is stored in the electric vehicle 10. Such data is further used to determine, by the electric vehicle 10, the current, voltage, and frequency required by the electric load 51. The electric vehicle 10 provides appropriate electric power based thereon.

The electric vehicle 10 provides electric power to the electric load 51 based on data obtained at S4.

For instance, at S5, the electric vehicle 10 determines that the electric vehicle 10 and the adapter 20 are configured according to the standard implemented in Sweden, the electric vehicle 10 provides electric power to the electric load 51 at 230V, 16A, and 50Hz.

In another example, at S6, the electric vehicle 10 determines that the electric vehicle 10 and the adapter 20 are configured according to the standard implemented in the United Kingdom, the electric vehicle 10 provides electric power to the electric load 51 at 230V, 13A, and 50Hz.

In yet another example, at S7, the electric vehicle 10 determines that the electric vehicle 10 and the adapter 20 are configured according to the standard implemented in Switzerland, the electric vehicle 10 provides electric power to the electric load 51 at 230V, 10A, and 50Hz.

At S8, the electric vehicle 10 obtains data indicative of whether the adapter 20 has been set to or configured to start or stop the V2V power transfer.

Such data is obtained through an interaction between the electric vehicle 10 and the connected adapter 20. For instance, the electric vehicle 10 provides test signals to the adapter 20, and monitors the response to such test signals by the adapter 20 at the electric vehicle 10. This way, the selected start or stop of the V2V power transfer can be determined, and the electric vehicle 10 provides appropriate electric power based thereon.

The adapter 20 is configured, for instance by a user, to provide such data upon interaction with the electric vehicle 10.

At S9, the electric vehicle 10 obtains data indicative of an electrical limit of the V2V cable 30.

Such data is obtained through an interaction between the electric vehicle 10 and the V2V cable 30 via the connected adapter 20. For instance, the electric vehicle 10 provides test signals to the connected V2V cable 30 via the connected adapter 20, and monitors the response to such test signals by the connected V2V cable 30 via the connected adapter 20 at the electric vehicle 10.

At S10, upon determining, by the electric vehicle 10, the electrical limit of the V2V cable 30, the electric vehicle 10 provides appropriate electric power based thereon.

For instance, the electric vehicle 10 limits the current according to the determined cable limit of the V2V cable 30.

Figure 3 illustrates a method for providing electric power from the electric vehicle 10.

At S11, the method starts.

At S12, at least one test signal is provided to the at least one two communication ports 15a and 15b of the socket 14 of the electric vehicle 10.

In case the adapter 20 is connected to the socket 14 of the electric vehicle 10, the at least one test signal is run through the adapter 20.

In case the adapter 20 is connected to the socket 14 of the electric vehicle 10, and the V2V cable 30 is connected to the adapter 20, the at least one test signal is run through the adapter 20 and the V2V cable 30.

At S13, data indicative of response of the at least one test signal is obtained via the at least two communication ports 15a and 15b of the 14 socket of the vehicle.

Obtaining data according to S12 and S13 corresponds to obtaining data according to at least one of S2, S3, S4, and S8.

At S14, power is selectively provided, based on the obtained data, to at least two power ports 16a and 16b of the 14 socket of the electric vehicle 10.

Providing electric power according to S14 corresponds to providing electric power according to at least one of S5, S6, S7, and S10.

At S15, the method ends.

The method illustrated in Figure 3 is performed by the data processing apparatus 90 comprised in the electric vehicle 10.

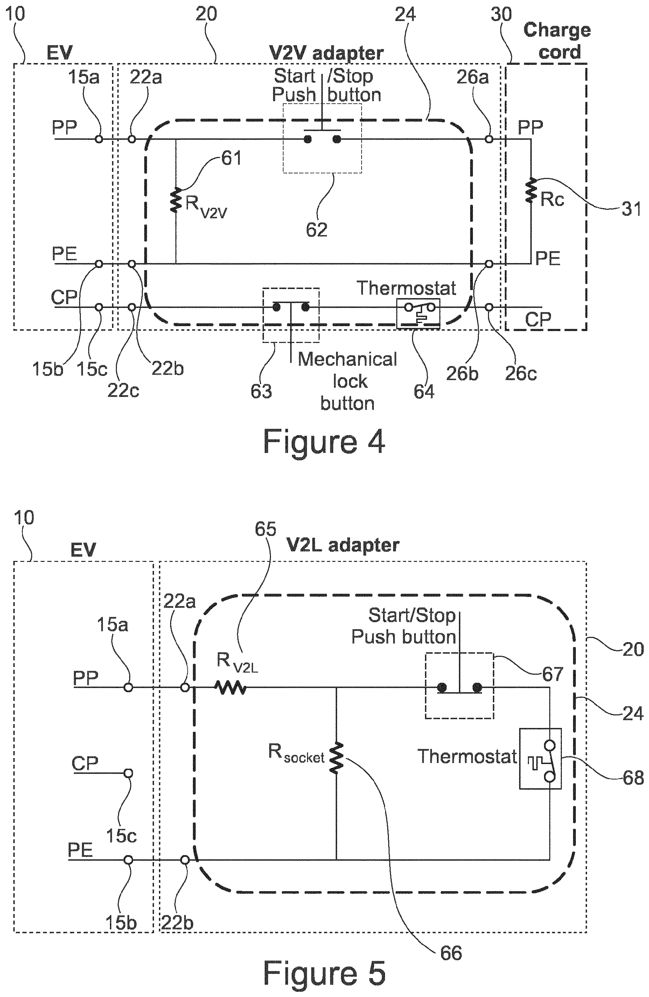

The detailed implementations of the adapter 20 shown in Figure 1 allowing the electric vehicle 10 to interact and obtain data through the adapter 20 according to the steps shown in Figures 2 and 3 are further elaborated in reference to Figures 4 and 5.

Figure 4 illustrates a detailed exemplary circuit of the adapter 20 shown in Figure 1 which has been set to or configured to operate under the V2V power transfer mode. Figure 4 further shows the connection of the adapter 20 to the 14 socket of the electric vehicle 10 on one side and to the V2V cable 30 on the other side.

For simplicity, the power ports 16a and 16b of the socket 14 of the electric vehicle 10, the adapter 20, and the V2V cable 30, as well as the interconnection module connecting the power ports 23a and 23b of the adapter 20 are omitted in Figure 4.

The first communication port of the socket 14 of the electric vehicle 10, of the first communication interface of the adapter 20, and of the first end of the V2V charging cable corresponds to Proximity pilot (PP) for pre-insertion signaling, the second communication port of the socket 14 of the electric vehicle 10, of the first communication interface of the adapter 20, and of the first end of the V2V charging cable corresponds Protective earth (PE) for full-current protective earthing system 5, and the third communication port of the socket 14 of the electric vehicle 10, of the first communication interface of the adapter 20, and of the first end of the V2V charging cable corresponds to Control pilot (CP) for post-insertion signaling.

The interconnection module comprises a first resistor 61 a first switch 62, a second switch 63, and a thermostat 64.

The first resistor 61, also herein referred as a V2V resistor (R_{V2V}), comprises a first end connected to the first communication port of the first communication interface of the adapter 20, and a second end connected to the second communication port of the first communication interface.

The first switch 62 comprises a first end connected to the first end of the first resistor 61, and a second end connected to the first communication port of the second communication interface.

The second switch 63 comprises one end connected to the third communication port of the first communication interface, and the other end connected to the third communication port of the second communication interface via the thermostat 64.

The V2V cable 30 comprises a charging resistor having a first end connected to the PP line and the PE line.

The first resistor 61 has a specific resistance, e.g., 500 Ω ± 1%.

The first resistor 61 can be utilized by the electric vehicle 10 to detect, determine, or confirm that the adapter 20 is connected to the socket 14 of the electric vehicle 10, and the adapter 20 is set to operate under the V2V power transfer mode.

For instance, the electric vehicle 10 senses the first resistor 61, and determines based thereon whether the adapter 20 has been connected to the socket 14 of the electric vehicle 10. In case the first resistor 61 is detected, the electric vehicle 10 determines that the V2V power transfer mode has been selected by the user.

The detection of the first resistor 61 can for instance be done by establishing a voltage over the first and second communication ports of the socket 14 of the electric vehicle 10, and measuring the currents at the socket 14.

When the first switch 62 is opened, i.e., the switch does not conduct electricity therethrough, the connection at the first and second communication ports of the second interface of the adapter 20 is not detectable. Accordingly, even if the V2V cable 30 is connected to the adapter 20, the cable resistance is not detected by the electric vehicle 10.

However, when the first switch 62 is closed, i.e., the switch conducts electricity therethrough, the connection at the first and second communication ports of the second interface of the adapter 20 is detectable. For instance, when the first switch 62 is closed and the V2V cable 30 is connected to the adapter 20 as shown in Figure 4, the cable resistor 31 is connected in parallel to the first resistor 61. Thus, the electric vehicle 10 can detect the equivalent resistance of the two resistors, which is different from the resistance of the resistance of the first resistor 61. Accordingly, the electric vehicle 10 can detect the connection of the V2V cable 30 to the adapter 20.

The state of the first switch 62, either closed or opened, is used by the electric vehicle 10 to determine whether to start or stop the V2V power transfer.

The first switch 62 is a push button switch.

The second switch 63 requires to be opened before disconnecting the electric vehicle 10. For instance, for the V2V cable 30 having a GBT AC or CCS1 connector type, the second switch 63 can be implemented such that engaging and disengaging a mechanical latch of the cable respectively closes and opens the second switch 63 of the adapter 20. For the V2V cable 30 having a CCS2 connector type, the second switch 63 can be implemented such that engaging and disengaging a button on the connector respectively closes and opens the second switch 63 of the adapter 20. Accordingly, the second switch 63 is used by the electric vehicle 10 to determine whether the V2V cable 30 is about to be disconnected from the adapter 20. Accordingly, the electric vehicle 10 determines whether to stop the V2V power transfer, so that arching can be avoided.

The thermostat 64 comprises a temperature-dependent switch, which is closed under a designed temperature range, but opens outside of said range. Accordingly, the state of the switch in the thermostat 64, either closed or opened, is used by the electric vehicle 10 to determine whether the adapter 20 is in the designed temperature range. Accordingly, the electric vehicle 10 determines whether to continue or stop the V2V power transfer.

Figure 5 illustrates a detailed exemplary circuit of the adapter 20 shown in Figure 1 which has been set to or configured to operate under the V2L power transfer mode. Figure 5 further shows the connection of the adapter 20 to the socket 14 of the electric vehicle 10 on one side.

For simplicity, the power ports of the socket 14 of the electric vehicle 10, the adapter 20, and the V2L cable 50, as well as the interconnection module connecting the power ports of the adapter 20 are omitted in Figure 5.

The first communication port of the socket 14 of the electric vehicle 10 and of the first communication interface of the adapter 20 corresponds to Proximity pilot (PP) for pre-insertion signaling, the second communication port of the socket 14 of the electric vehicle 10 and of the first communication interface of the adapter 20 corresponds Protective earth (PE) for full-current protective earthing system 5, and the third communication port of the socket 14 of the electric vehicle 10 corresponds to Control pilot (CP) for post-insertion signaling.

Under the V2L power transfer mode, the third communication port of the socket 14 of the electric vehicle 10 is disconnected from the third communication port of the first interface of the adapter 20. Thus, the third communication port of the first interface of the adapter 20 is omitted in Figure 5.

Further, for V2L power transfer mode, the communication ports of the second interface of the adapter 20 are not connected to any further ports. Thus, the said ports are omitted in Figure 5.

Ther interconnection module comprises a second resistor 65, also referred herein as a V2L resistor (R_{V2L}) comprising a first end connected to the first communication port of the fist interface of the adapter 20, and a second end connected to a first end of the third resistor 66, also referred herein as a socket resistor (R_{socket}), and to a first end of a third switch 67. A second end of the third switch 67 is connected to a second end of the third resistor 66 via a thermostat 68. The second end of the third resistor 66 is connected to the second communication port of the first communication interface of the adapter 20.

The second resistor 65 has a specific resistance, e.g., 1000 Ω ± 1%, and the third resistor 66 has a specific resistance, e.g., 2000 Ω ± 1%, 3000 Ω ± 1%, 4000 Ω ± 1%, or different values based on the socket-plug type of the second power interface of the adapter 20 for connecting the electric load 51.

Such socket-plug type is dependent on the standard implemented by a country, for which the adapter 20 is configured for. For instance, socket-plug type A is used in the USA, Canada, Mexico, and Japan, socket-plug type B is used in the USA, Canada, and Mexico, socket-plug type C is used by some of the countries in Europe, South America and Asia, socket-plug type D is used in India, socket-plug type E is used in France, Belgium, Poland, Slovakia, Czech republic, socket-plug type F is used in some countries in Europe and Rusia, socket-plug type G is used in the United Kingdom, Ireland, Malta, Malaysia, and Singapore, socket-plug type H is used in Israel, socket-plug type I is used in Australia, New Zealand, China, and Argentina, socket-plug type J is used in Switzerland and Liechtenstein, socket-plug type K is used in Denmark, socket-plug type L is used in Italy and Chile, socket-plug type M is used in South Africa, socket-plug type N is used in Brazil and South Africa, and socket-plug type O is used in Thailand.

The second resistor 65 is utilized by the electric vehicle 10 to detect, determine, or confirm that the adapter 20 is connected to the socket 14 of the electric vehicle 10.

For instance, assuming a negligible resistance of the third switch 67 and the thermostat 68 with respect to the third resistor 66, and when the switch is closed, i.e., conducting the electricity therethrough, the electric vehicle 10 senses an equivalent resistance approximately the same as the resistance of the third switch 67, and determines based thereon that the adapter 20 has been connected to the socket 14 of the electric vehicle 10.

A combination of the second and third resistors 65 and 66 is utilized by the electric vehicle 10 to detect, determine, or confirm that the adapter 20 has been set to operate under the V2L power transfer mode.

For instance, when the third switch 67 is opened, i.e., the switch does not conduct electricity therethrough, the electric vehicle 10 senses an equivalent resistance equating to a linear sum of the resistances of the second and third resistors 65 and 66, and determine that the V2L power transfer mode has been selected.

Accordingly, based on the equivalent resistance of the adapter 20 monitored at the socket 14, the electric vehicle 10 determines whether to start or stop the V2L power transfer.

The detection of the second and third resistors 65 and 66 can for instance be done by establishing a voltage over the first and second communication ports of the socket 14 of the electric vehicle 10, and measuring the currents at the socket 14.

The thermostat 68 comprises a temperature-dependent switch, which is closed under a designed temperature range, but opens outside of said range. Accordingly, the state of the switch in the thermostat 68, either closed or opened, is used by the electric vehicle 10 to determine whether the adapter 20 is in the designed temperature range. Accordingly, the electric vehicle 10 determines whether to continue or stop the V2L power transfer.

The interconnection module comprises both circuits shown in Figure 2 and Figure 3, and switches therebetween depending on the selection at the adapter 20, e.g., by a user. Such switching between the configured circuits can be achieved by a plurality of switches, which are omitted in Figures 2 and 3 for brevity.

Figure 6 illustrates different scenarios for providing electric power from the electric vehicle 10 to the connected electric load 51 via the adapter 20.

Every scenario comprises an electric vehicle 10 comprising a socket 14. The socket 14 is connected to the adapter 20, which has been configured to operate under the V2L power transfer mode, thereby comprising the interconnection module configured according to Figure 5. The electric load 51 80, e.g., an electrically heated kettle, is connected to the adapter 20 via the plug 70 with a country-specific socket-plug type.

The electric vehicle 10 that has been configured for the United States comprises a socket 14 of either type 1 or combo 1 as described in IEC 62196-2. The electric vehicle 10 that has been configured for the non-US countries, such as countries in South America or Europe, comprises a socket 14 of either type 2 or combo 2 as described in IEC 62196-2.

The resistance of the socket resistor 66 of the interconnection module in Figure 5 is specifically set for respective groups of countries, referred in Figure 6 as "Resistor#N", wherein N is a natural number from 1 to 4.

The electric vehicle 10 obtains relevant data, for instance by performing the method shown in Figure 3 following the logic of flowchart shown in Figure 2. The data comprises the data indicative of the configured connector type of the socket 14 of the electric vehicle 10, the data indicative of the adapter's configured socket-plug type, and the data indicative of the start or stop of the V2L power transfer. Accordingly, electric vehicle 10 provides appropriate electric power to the electric load 51 via the adapter 20.

The data indicative of the configured connector type of the socket 14 of the electric vehicle 10 is stored in the data processing apparatus 90 of the electric vehicle 10.

In scenario 1, the adapter 20 configured as a first variant is considered. Specifically, the adapter 20 is configured according to the socket-plug type standard implemented by Sweden.

In Sweden, socket-plug type F, also referred to as a first socket-plug type 71, is used. Accordingly, the adapter 20 comprises corresponding resistor #1 as the socket resistor 66. Further, in Sweden, connector type 2 or combo 2 according to IEC 62196-2 is implemented for the socket 14 of the electric vehicle 10.

The electric vehicle 10 obtains such data of the electric vehicle 10 and the adapter 20, and determines that electric power provided by the electric vehicle 10 to the electric load 51 needs to be at 230V, 16A, and 50 Hz.

In scenario 2, the adapter 20 configured as a second variant is considered. Specifically, the adapter 20 is configured according to the socket-plug type standard implemented by the UK.

In the UK, socket-plug type G, also referred to as a second socket-plug type 72, is used. Accordingly, the adapter 20 comprises corresponding resistor #2 as the socket resistor 66. Further, in the UK, connector type 2 or combo 2 according to IEC 62196-2 is implemented for the socket 14 of the electric vehicle 10.

The electric vehicle 10 obtains such data of the electric vehicle 10 and the adapter 20, and determines that electric power provided by the electric vehicle 10 to the electric load 51 needs to be at 230V, 13A, and 50 Hz.

In scenario 3, the adapter 20 configured as a third variant is considered. Specifically, the adapter 20 is configured according to the socket-plug type standard implemented by Switzerland.

In Switzerland, socket-plug type J, also referred to as a third socket-plug type 73, is used. Accordingly, the adapter 20 comprises corresponding resistor #3 as the socket resistor 66. Further, in Switzerland, connector type 2 or combo 2 according to IEC 62196-2 is implemented for the socket 14 of the electric vehicle 10.

The electric vehicle 10 obtains such data of the electric vehicle 10 and the adapter 20, and determines that electric power provided by the electric vehicle 10 to the electric load 51 needs to be at 230V, 10A, and 50 Hz.

In scenario 4, the adapter 20 configured as a fourth variant is considered. Specifically, the adapter 20 is configured according to the socket-plug type standard implemented by Brazil.

In Brazil, socket-plug type N, also referred to as a fourth socket-plug type 71, is used. Accordingly, the adapter 20 comprises corresponding resistor #4 as the socket resistor 66. Further, in Brazil, connector type 2 or combo 2 according to IEC 62196-2 is implemented for the socket 14 of the electric vehicle 10.

The electric vehicle 10 obtains such data of the electric vehicle 10 and the adapter 20, and determines that electric power provided by the electric vehicle 10 to the electric load 51 needs to be at 220V, 10A, and 60 Hz.

In scenario 5, the adapter 20 configured as a first variant is considered. Specifically, the adapter 20 is configured according to the socket-plug type standard implemented by the US.

In the US, socket-plug type of NEMA 6-20, also referred to as a first socket-plug type 71, is used. Accordingly, the adapter 20 comprises corresponding resistor #1 as the socket resistor 66. Further, in the US, connector type 1 or combo 1 according to IEC 62196-2 is implemented for the socket 14 of the electric vehicle 10.

The electric vehicle 10 obtains such data of the electric vehicle 10 and the adapter 20, and determines that electric power provided by the electric vehicle 10 to the electric load 51 needs to be at 240V, 20A, and 60 Hz.

Although the adapter 20 is configured as the first variant, which is also the configuration of the adapter 20 considered in scenario 1, the required voltage, current, and frequency for providing electric power can be distinguished from scenario 1, because the connector type of the socket 14 of the electric vehicle 10 in Sweden differs from the US.

In scenario 6, the adapter 20 configured as a second variant is considered. Specifically, the adapter 20 is configured according to the socket-plug type standard implemented by the US.

In the US, socket-plug type B, specifically NEMA 5-15, also referred to as a second socket-plug type 72, is also used. Accordingly, the adapter 20 comprises corresponding resistor #2 as the socket resistor 66. Further, in the US, connector type 1 or combo 1 according to IEC 62196-2 is implemented for the socket 14 of the electric vehicle 10.

The electric vehicle 10 obtains such data of the electric vehicle 10 and the adapter 20, and determines that electric power provided by the electric vehicle 10 to the electric load 51 needs to be at 120V, 15A, and 60 Hz.

Although the adapter 20 is configured as the second variant, which is also the configuration of the adapter 20 considered in scenario 2, the required voltage, current, and frequency for providing electric power can be distinguished from scenario 2, because the connector type of the socket 14 of the electric vehicle 10 in the UK differs from the US.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 5: System
- 10: Electric vehicle
- 11: Battery
- 12: Communication module
- 13: Power transfer module
- 14: Socket
- 15a: First communication port
- 15b: Second communication port
- 15c: Third communication port
- 16a: First power port
- 16b: Second power port
- 20: Adapter
- 21: First interface
- 22a: First communication port
- 22b: Second communication port
- 22c: Third communication port
- 23a: First power port
- 23b: Second power port
- 24: Interconnection module
- 25: Second interface
- 26a: First communication port
- 26b: Second communication port
- 26c: Third communication port
- 27a: First power port
- 27b: Second power port
- 30: Vehicle-to-Vehicle cable
- 31: Cable resistor
- 40: Charging electric vehicle
- 41: Battery
- 42: Communication module
- 43: Power transfer module
- 44: Socket
- 45a: First communication port
- 45b: Second communication port
- 45c: Third communication port
- 46a: First power port
- 46b: Second power port
- 47: Data processing apparatus
- 50: Vehicle-to-Load cable
- 51: Electric load
- 61: Vehicle-to-Vehicle resistor
- 62: First communication switch
- 63: Second communication switch
- 64: Thermostat
- 65: Vehicle-to-Load resistor
- 66: Socket resistor
- 67: Third communication switch
- 68: Thermostat
- 70: Plug
- 71: First socket-plug type
- 72: Second socket-plug type
- 73: Third socket-plug type
- 74: Fourth socket-plug type
- 75: Fifth socket-plug type
- 76: Sixth socket-plug type
- 80: Output ratings
- 90: Data processing apparatus
- 91: Data storage unit
- 92: Computer-readable storage medium
- 93: Computer program
- 94: Data processing unit
- S1: First step
- S2: Second step
- S3: Third step
- S4: Fourth step
- S5: Fifth step
- S6: Sixth step
- S7: Seventh step
- S8: Eighth step
- S9: Nineth step
- S10: Tenth step
- S11: Eleventh step
- S12: Twelfth step
- S13: Thirteenth step
- S14: Fourteenth step
- S15: Fifteenth step

## Claims

1. An adapter (20) for providing electric power by an electric vehicle (10), the adapter (20) comprising:
- a first communication interface connectable to a socket (14) of the electric vehicle (10);
- a first power interface connectable to the socket (14) of the electric vehicle (10);
- a second power interface connectable to one end of a vehicle-to-vehicle, V2V, cable (30), and/or to one end of a vehicle-to-load, V2L, cable (50); and
- at least one first passive component (61) indicative of a V2V connection and/or at least one second passive component (65, 66) indicative of a V2L connection,
wherein at least two communication ports (22a, 22b, 22c) of the first communication interface are connected to one another via the at least one first passive component (61) and/or the at least one second passive component (65, 66), and
wherein at least two power ports (23a and 23b) of the first power interface are electrically connected to the second power interface.

2. The adapter (20) of claim 1, comprising:
- both the at least one first passive component (61) and the at least one second passive component (65, 66); and
- a mode switching module selectively connecting the at least two communication ports (22a, 22b, 22c) to one another via either the at least one first passive component (61) or the at least one second passive component (65, 66).

3. The adapter (20) of claim 1 or 2, wherein the adapter (20) comprises:
- a plurality of second passive components (65, 66),
wherein at least one passive component (66) of the plurality of second passive components (65, 66) is indicative of a socket (14) type of the second power interface connectable to the one end of the V2L cable (50).

4. The adapter (20) of claim 3, wherein the at least one passive component (66) is connected in series to the rest of the plurality of second passive components (65), and wherein the adapter (20) further comprises:
- a V2L power switching module (67) connected in parallel to the at least one passive component (66),
wherein the V2L power switching module (67) selectively connects or disconnects a parallel line comprising the V2L power switching module (67).

5. The adapter (20) of claim 4, further comprising:
- at least one third passive component (68), indicative of an ambient condition, connected to the V2L power switching module (67) in series.

6. The adapter (20) of any one of the preceding claims, further comprising:
- a second communication interface connectable to the one end of the V2V cable (30); and
- a V2V power switching module (62) selectively connecting or disconnecting at least two communication ports (22a, 22b, 22c) of the second communication interface to the respective at least two communication ports (26a, 26b, 26c) of the first communication interface.

7. The adapter (20) of any one of the preceding claims, wherein the first communication interface comprises a third communication port (22c), and wherein the adapter (20) further comprises:
- at least one fourth passive component (64), indicative of an ambient condition, connected to the third communication port (22c); and
- a safety switching module (63) selectively connecting or disconnecting the third communication port (22c) to a ground port comprised in the adapter (20) or a further communication port (26c) comprised in the second interface.

8. A method for providing electric power by an electric vehicle (10) using the adapter (20) of any one of the preceding claims having the first communication interface and the first power interface of the adapter (20) connected to a socket (14) of the electric vehicle (10), the method comprising:
- providing, to at least two communication ports (15a, 15b, 15c) of the socket (14) of the electric vehicle (10), at least one test signal;
- obtaining, via the at least two communication ports (15a, 15b, 15c) of the socket (14) of the electric vehicle (10), data indicative of a response to the at least one test signal; and
- selectively providing, based on the obtained data, power to at least two power ports (16a and 16b) of the socket (14) of the electric vehicle (10).

9. The method of claim 8, further comprising:
- obtaining, from the electric vehicle (10), further data indicative of mains electricity of a country to which the electric vehicle (10) is adjusted,
wherein selectively providing power to the at least two power ports (16a and 16b) of the socket (14) of the electric vehicle (10) is further based on the obtained further data.

10. A data processing apparatus (90) comprising means (94) for carrying out the method of claim 8 or 9.

11. An electric vehicle (10) comprising:
- a socket (14) connectable to a first communication interface and a first power interface of an adapter (20);
- a battery (11);
- a communication module (12);
- a power transfer module (13); and
- a data processing apparatus (90) according to claim 10,
wherein the socket (14) comprises at least two communication ports (15a, 15b, 15c) and at least two power ports (16a and 16b),
wherein the at least two communication ports (15a, 15b, 15c) of the socket (14) are communicatively connected to the communication module (12),
wherein the at least two power ports (16a and 16b) of the socket (14) are electrically connected to the battery (11) via the power transfer module (13), and
wherein the communication module (12) is communicatively connected to the power transfer module (13) via the data processing apparatus (90).

12. The electric vehicle (10) of claim 11, wherein the socket (14) comprises:
- a third communication port (15c) connectable to a third communication port (22c) of a first communication interface of an adapter (20),
wherein the third communication port of the socket (14) is communicatively connected to the communication module (12).

13. The electric vehicle (10) of claim 11 or 12, wherein the data processing apparatus (90) comprises:
- a data storage module (91) storing further data indicative of mains electricity of a country to which the electric vehicle (10) is adjusted.

14. A system (5) comprising:
- the adapter (20) according to any one of claims 1 to 7;
- the electric vehicle (10) according to any one of claims 11 to 13; and
- a vehicle-to-vehicle, V2V, cable (30) comprising one end connectable to the second power interface of the adapter (20) and the other end connectable to a socket (14) of a charging electric vehicle (40), and the charging electric vehicle (40), or
a vehicle-to-load, V2L, cable (50) comprising one end connectable to the second power interface of the adapter (20) and the other end connectable to an electric load (51), and the electric load (51),
wherein the first communication interface and the first power interface of the adapter (20) are connected to the socket (14) of the electric vehicle (10), and
wherein the second power interface of the adapter (20) is connected to the one end of the V2V cable (30) or the one end of the V2L cable (50).

15. The system (5) of claim 14, wherein the V2V cable (30) comprises or is a standardized cable for a V2V power transfer, and/or wherein the V2V cable (30) comprises at least two communication ports connectable to the second communication interface of the adapter (20) and connected to one another via a fifth passive component.
